# EUROPÄISCHE PATENTSCHRIFT

(11) **EP 0 304 712 B1**
(45) Veröffentlichungstag und Bekanntmachung des Hinweises auf die Patenterteilung: **12.05.1993**
(21) Anmeldenummer: 88112843.3
(22) Anmeldetag: 06.08.1988
(51) Int. Cl.: B09B 5/00, E21B 43/00

(54) **Verfahren und Anordnung zum Austreiben leichtflüchtiger Verunreinigungen aus dem Erdreich**
Method of and device for removing volatile contaminants from the soil
Procédé et dispositif pour retirer des polluants volatilisables du sol

(30) Priorität: 25.08.1987 DE 3728299
(43) Veröffentlichungstag der Anmeldung: 01.03.1989
(73) Patentinhaber: IEG Industrie-Engineering GmbH, D-72770 Reutlingen (DE)
(72) Erfinder: Bernhardt, Bruno, D-7410 Reutlingen 11-Betzingen (DE); Hessner, Anton, D-7410 Reutlingen (DE); Krug, Rainer, D-7416 Trochtelfingen (DE)
(74) Vertreter: Möbus, Rudolf, Dipl.-Ing.

(56) Entgegenhaltungen:
- DE-A- 2 835 250
- DE-A- 3 437 195
- US-A- 3 768 557
- US-A- 4 593 760

## Beschreibung

Die Erfindung betrifft ein Verfahren und eine Anordnung zum Austreiben leichtflüchtiger Verunreinigungen aus dem Erdreich mit Hilfe von Luft, die zusammen mit den Gasen aus einem in das verunreinigte Erdreich getriebenen Schacht mit gasdurchlässiger Schachtwandung an einer oder mehreren, gasdurchlässig mit Füllmaterial umgebenen Schachtstellen abgesaugt wird, wobei Öffnungen zum Nachfließen von Luft von außen in das Erdreich vorgesehen sind.

Ein Verfahren der vorstehend genannten Art und eine Anordnung zur Durchführung dieses Verfahrens sind aus der US-A-4 593 760 und aus der DE-A-3 626 145 bekannt. Dieses Verfahren ist sehr wirkungsvoll. Als Öffnungen zum Nachfließen von Luft von außen in das Erdreich werden mit Abstand von dem Schacht eingebrachte Zusatzbohrungen vorgeschlagen, in welche Luft frei nachfließen kann oder eingepreßt werden soll. Probleme ergeben sich jedoch bei der Anwendung des Verfahrens zum Austreiben von Verunreinigungen aus sehr dichten, lehmigen Böden, wo der dichte Boden nur in geringem Maße Luft nachströmen läßt. Dadurch entsteht dort auch bei der Steigerung des Unterdruckes im Schacht nur eine unzureichende Strömungsgeschwindigkeit der Luft und der Gase im Schacht und im Boden. Eine Erhöhung des Unterdrucks im Absaugschacht bedeutet sowohl einen erhöhten Energieaufwand, der die Wirtschaftlichkeit des Verfahrens in Frage stellen kann, als auch den gravierenden Nachteil, daß in den zur Anwendung kommenden Unterdruckerzeugern das abgesaugte Gas/Luft-Gemisch so stark erwärmt wird, daß beispielsweise abgesaugte Chlorkohlenwasserstoffe instabil werden und sich in hochgiftige Stoffe umwandeln können. Physikalische Überlegungen haben auch gezeigt, daß die zur Aufnahme der leichtflüchtigen Verunreinigungen in Gasform dienende Luft eine bestimmte Mindestströmungsgeschwindigkeit haben muß, damit überhaupt eine wirkungsvolle Mitnahme der Verunreinigungen erreicht wird.

Der Erfindung liegt die Aufgabe zugrunde, ein Verfahren der genannten Art und eine Anordnung zur Ausführung dieses Verfahrens so auszubilden, daß ihre Wirksamkeit zur Bewältigung der angesprochenen Probleme erhöht wird.

Die gestellte Aufgabe wird erfindungsgemäß mit einem Verfahren mit den Merkmalen des kennzeichnenden Teiles des Hauptanspruches und mit einer Anordnung mit den Merkmalen des Patentanspruches 4 gelöst.

Durch die Konzentration der Absaugung auf bestimmte Stellen im Schacht ist sichergestellt, daß die Nachfließluft den Schacht bis zur Absaugstelle durchströmt und in diesem ganzen Bereich eine die Aufnahme der durch die Schachtwandung eindringenden gasförmigen Verunreinigungen erleichternde Luftströmung auftritt. Vorzugsweise wird hierbei das Absaugen auf die tiefste Schachtstelle konzentriert, weil sich gezeigt hat, daß viele der schädlichen Verunreinigungen wegen eines höheren spezifischen Gewichtes die Tendenz haben, tiefer in den Boden in Richtung auf das Grundwasser einzudringen. Durch die Nachfließluft ist ohnehin sichergestellt, daß auch die in den oberen Schachtbereichen in den Schacht eintretenden Gase bis zu einer am Schachtboden angeordneten Absaugstelle mittransportiert werden.

Mittels einer Probebohrung kann zunächst festgestellt werden, welche Widerstandsverhältnisse in den zu reinigenden Bodenschichten herrschen, und dementsprechend kann dann der Nachfließwiderstand für die in den gebildeten Schacht nachfließende Luft eingestellt werden.

Zur Durchführung des Verfahrens kann zweckmäßig eine in der älteren Patentanmeldung P 36 26 145.9 vorgeschlagene Siebwandungsbewehrung des Schachtes so abgewandelt werden, daß erfindungsgemäß die Siebwandung in den gewählten Absaugbereichen aus einem Siebringkörper besteht, dessen Außenseite an der Schachtwandung anliegt und in dessen innere Öffnung ein undurchbrochenes, nur an seinen Enden offenes, aus dem Schacht hinausführendes Absaugrohr gegenüber der Innenseite des Siebringes abgedichtet eingesetzt ist, und daß der Luftnachfließkanal durch den Schacht hindurchführt und der Luftnachfließwiderstand mindestens durch die Füllkörperfüllung des das Absaugrohrende umgebenden Siebringes geschaffen ist. Der Nachfließwiderstand kann aber zusätzlich durch weitere in den Schacht absenkbare, durch Fullkörper versteifte und das geschlossenwandige Absaugrohr umschließende Siebringe oder Siebringkörper und hierbei auch durch die Größe der gewählten Füllkörper beeinflußt werden. Eine genaue Einstellung ist gewährleistet, wenn der Luftnachfließwiderstand zusätzlich durch ein in den oberen Schachtverschluß einsetzbares und einstellbares Druckbegrenzungsventil beeinflußbar ist.

Die Erfindung erbringt den Vorteil, daß im Schacht immer ein gezieltes Einströmen vorhanden ist, das die Aufnahme der gasförmigen Verunreinigungen aus dem den Schacht umgebenden Bodenbereich begünstigt. Beim Einsatz eines einstellbaren Druckbegrenzungsventiles kann sich bei leichtdurchlässigen Böden dabei automatisch ergeben, daß kaum noch oder keine Nachfließluft direkt in den Schacht geholt wird, sondern daß durch den Unterdruckerzeuger, insbesondere einen Ventilator, überwiegend oder nur durch den leichtdurchlässigen Boden nachgezogene Luft zusammen mit den zu entfernenden Gasen durch den Schacht zur Ansaugstelle geholt wird. In jedem Falle ist aber sichergestellt, daß mit einem relativ geringen Unterdruck gearbeitet wird, dessen Erzeugung nur einen wirtschaftlichen Energieaufwand erforderlich macht und bei welchem das abgesaugte Luft/Gas-Gemisch keine unzulässig starke Erwärmung erfährt.

Ein weiterer wichtiger Vorteil ist aber, daß mittels der Nachfließluft und deren gezieltes Einströmen ein beim Absaugen zu befürchtendes Austrocknen der oberen Bodenschicht verhindert werden kann. Durch dieses Austrocknen sind schon Schäden an Gebäudefundamenten aufgetreten und kann die Mikrobenflora nachhaltig geschädigt werden.

Die Anordnung kann mehrere, mit Abstand konzentrisch zueinander angeordnete, geschlossenwandige Absaugrohre aufweisen, deren offene Enden in unterschiedlichen Bereichen des Schachtes enden und jeweils von einem Siebringkörper umgeben sind. Eine solche Anordnung ist zweckmäßig in Schächten, die durch mehrere Bodenschichten hindurchführen und wo etwa eine vom Schachtboden entfernte Schicht wegen höherer Bodendurchlässigkeit besonders stark verunreinigt ist. Hier erweist es sich als vorteilhaft, wenn im Bereich dieser Bodenschicht im Schacht eine zusätzliche Absaugstelle vorhanden ist.

Das mit der Erfindung mögliche wirkungsvolle Arbeiten mit einem geringen Unterdruck hat auch den Vorteil, daß aus feuchten Böden oder bei im Grundwasser endenden Schächten nicht so leicht Flüssigkeit mithochgefördert wird. In jedem Falle kann das Absaugrohr oder können die Absaugrohre aber zweckmäßig außerhalb des abgedichteten Schachtes in einer Flüssigkeitsabscheidekammer enden, an deren oberen Bereich dann der zu einem Ventilator führende Absaugkanal mündet. In der Flüssigkeitsabscheidekammer können mittels Füllkörpern oder mittels Innenwandungen Abscheideflächen für Flüssigkeit gebildet werden, die automatisch oder willkürlich von Zeit zu Zeit aus der Flüssigkeitsabscheidekammer abgeleitet werden kann. Das abgesaugte Luft/Gas-Gemisch wird durch eine Filtervorrichtung geleitet. Auch die aus der Flüssigkeitsabscheidekammer austretende Flüssigkeit wird zweckmäßig gefiltert.

Nachfolgend wird eine Anordnung gemäß der Erfindung anhand der beiliegenden Zeichnung näher erläutert.

Im einzelnen zeigen:
- Fig. 1: einen schematischen Schnitt durch eine erfindungsgemäß ausgebildete Anordnung;
- Fig. 2: eine gegenüber Fig. 2 vergrößerte Schnittdarstellung des unteren Schachtbereiches und der dort geschaffenen Absaugstelle.

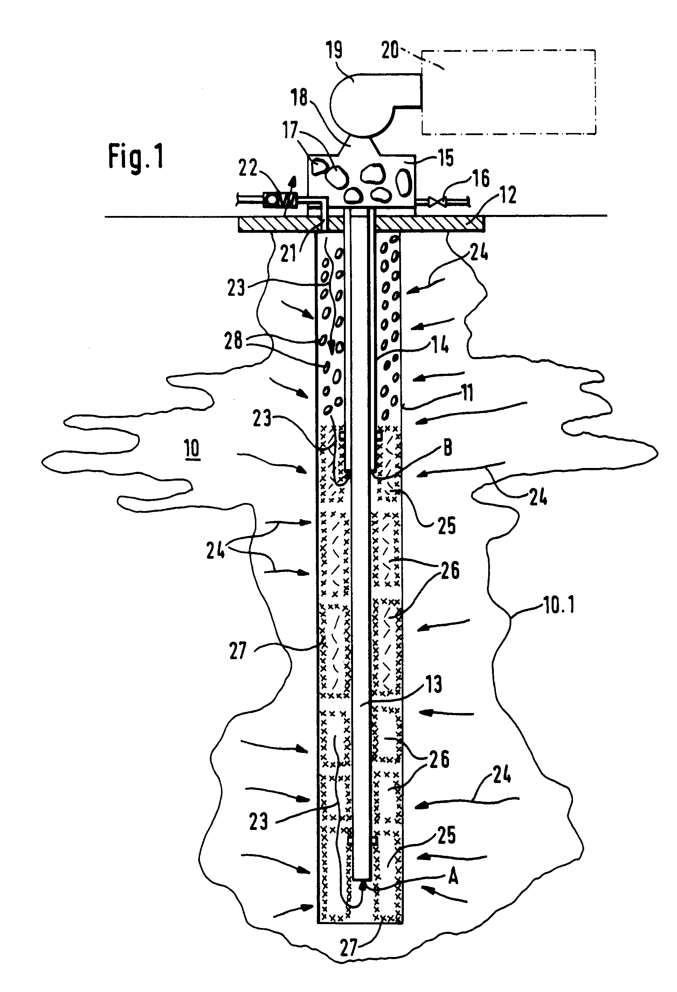

Fig. 1 zeigt einen in ein verunreinigtes Erdreich 10 zentral niedergebrachten Bohrschacht 11. Die Verteilung der Verunreinigung im Erdreich 10 ist mit einer Punktierung und mit einer Umrißlinie 10.1 angedeutet. In den nach außen durch eine Platte 12 abgedichteten Bohrschacht ist ein ungelochtes erstes Absaugrohr 13 bis in die Nähe des Schachtbodens geführt. Ein zweites, auf dem ersten Absaugrohr 13 mit Abstand konzentrisch angeordnetes Absaugrohr 14 ist nur knapp bis zur Hälfte des Bohrschachtes 11 geführt. Die inneren Enden beider Rohre bilden jeweils eine Absaugstelle A und B.

Die beiden Absaugrohre 13 und 14 enden außerhalb des Schachtes in einer Flüssigkeitsabscheidekammer 15, die mit einem Flüssigkeitsauslaßventil 16 versehen ist. In die Flüssigkeitsabscheidekammer 15 sind zur Erzielung großer Abscheideflächen Füllkörper 17 eingebracht. Über einer oberen Öffnung 18 der Flüssigkeitsabscheidekammer 15 ist ein zur Unterdruckerzeugung dienender Ventilator 19 angeordnet, dessen Ausgang mit einer mit strichpunktierten Linien angedeuteten Filtervorrichtung 20 verbunden ist.

Durch die Verschlußplatte 12 ist neben den beiden Absaugrohren 13 und 14 auch ein Luftzufuhrrohr 21 hindurchgeführt, in welche ein einstellbares Druckbegrenzungsventil 22 gelegt ist. Durch das Rohr 21 kann von außen Luft in den Schacht 11 nachfließen, sobald der vom Ventilator 19 im Schacht erzeugte Unterdruck einen am Druckbegrenzungsventil 22 eingestellten Schwellwert unterschreitet. Die durch das Rohr 21 einströmende sogenannte Nachfließluft ist in Fig. 1 durch Pfeillinien 23 angedeutet. Die aus dem kontaminierten Bodenbereich 10 zu dem unter Unterdruck gehaltenen Schacht 11 strömenden Gase der Verunreinigungen sind durch zum Schacht gerichtete Pfeile 24 angedeutet.

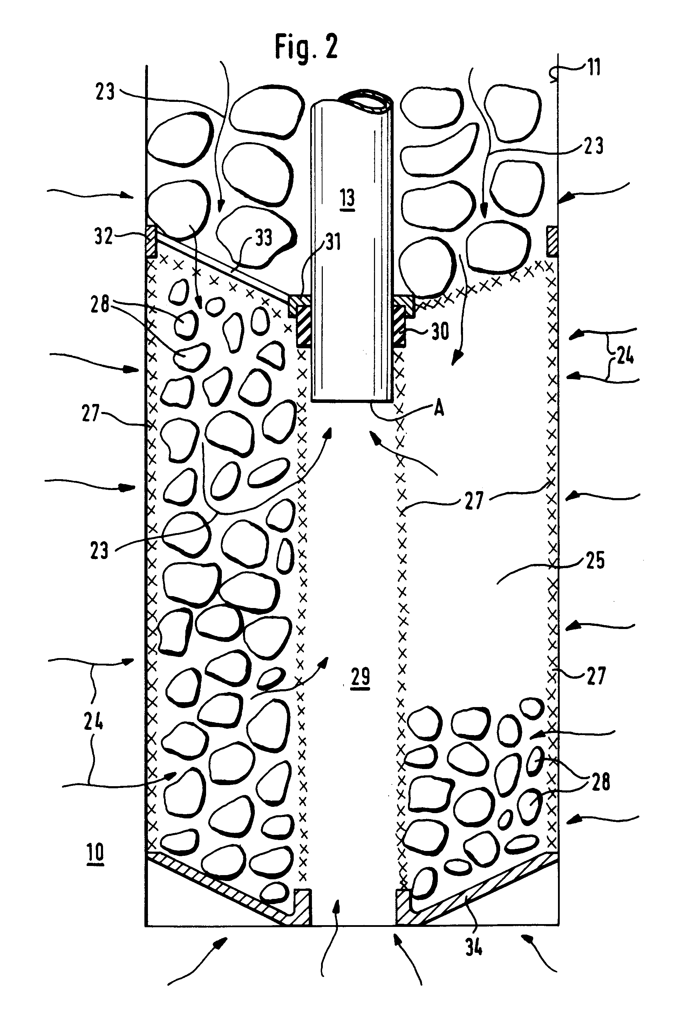

In Fig. 1 ist am Ende der beiden Absaugrohre 13 und 14 jeweils ein Siebringkörper 25 und sind zwischen diesen beiden Siebringkörpern 25 weitere Siebringkörper 26 angeordnet. Die Siebringkörper 25, 26 weisen jeweils eine flexible Siebwandung 27 auf, die in der Zeichnung mit Kreuzen gekennzeichnet ist. Die Siebwandungen können aus Metallsiebgewebe oder Kunststoffsiebgewebe bestehen. Der von der Siebgewebewandung 27 umschlossene Ringraum ist mit relativ großen Füllkörpern 28 ausgefüllt, wie aus der vergrößerten Schnittdarstellung der Fig. 2 ersichtlich ist. Die Siebringkörper 25 und 26 dienen in erster Linie zur Abstützung der Wandung des Schachtes 11. In Fig. 1 ist der obere Teil des Schachtes 11 allein mittels eingeschütteter Füllkörper 28 ohne Siebgewebeumhüllung abgestützt. Aber auch hier könnten Siebringkörper oder Siebringe, wie sie aus der älteren Patentanmeldung P 36 26 145.9 zum Teil bekannt sind, angewendet werden.

Wie aus Fig. 2 ersichtlich ist, ragt in den vom Siebringkörper umschlossenen Innenraum 29 der Endbereich des Absaugrohres 13, dessen Ende die Absaugstelle A bildet. Dabei ist das Absaugrohr 13 mittels eines Dichtungsringes 30 gegenüber der inneren Siebwandung 27 des Siebringkörpers 25 abgedichtet, um zu verhindern, daß Nachfließluft 23 ungebremst an der Außenseite des Absaugrohres 13 entlangfließen kann. Der Dichtungsring 30 ist in einem Zentrierring 31 für das Rohr 13 gehalten, der über einzelne Radialstege 33 mit einem äußeren Versteifungsring 32 verbunden ist. Das untere Ende des Siebringkörpers 25 ist durch eine das Einführen des Siebkörpers in den Rohrschacht (11) erleichternde konische Ringscheibe 34 versteift. Die Füllkörper 28 im Innern des Siebringkörpers 25 dienen nicht nur zur Aussteifung des Siebringkörpers und zur Abstützung der Wandung des Schachtes 11, sondern bilden auch Durchflußwiderstände für die Nachfließluft 23 und die von ihr aufgenommenen Gase 24.

## Patentansprüche

1. Verfahren zum Austreiben leichtflüchtiger Verunreinigungen aus dem Erdreich (10) mit Hilfe von Luft, die zusammen mit den Gasen aus einem in das verunreinigte Erdreich getriebenen Schacht (11) mit gasdurchlässiger Schachtwandung an einer oder mehreren, gasdurchlässig mit Füllmaterial umgebenen Schachtstellen abgesaugt wird, wobei Öffnungen zum Nachfließen von Luft von außen in das Erdreich vorgesehen sind, dadurch gekennzeichnet, daß zwecks Beeinflussung der im Schacht auftretenden Unterdruckwerte und Strömungsgeschwindigkeit den Absaugschachtstellen (A, B) Nachfließluft (23) über bis zu den Absaugschachtstellen geführte Nachfließkanäle mit zeitlich vor- oder nacheinstellbarem Nachfließwiderstand zugeleitet wird.

2. Verfahren nach Anspruch 1, dadurch gekennzeichnet, daß eine Voreinstellung des Nachfließwiderstandes mittels in die Nachfließkanäle eingebrachter Füllkörper (28) erfolgt.

3. Verfahren nach Anspruch 1 und 2, dadurch gekennzeichnet, daß eine Nacheinstellung des Nachfließwiderstandes mittels eines in einem Nachfließkanal zusätzlich angeordneten Druckbegrenzungsventiles (22) erfolgt.

4. Anordnung zur Durchführung des Verfahrens nach einem der Ansprüche 1 bis 3, bei welcher die Wandung des Schachtes mittels einer aus- und einsetzbaren flexiblen und durch eingeschüttete Füllkörper abgescützten Siebwandung versehen ist, dadurch gekennzeichnet, daß die Siebwandung (27) in dem gewählten Absaugbereich aus einem Siebringkörper (25) besteht, dessen Außenseite an der Schachtwandung anliegt und in dessen innere Öffnung (29) ein undurchbrochenes, nur an seinen Enden offenes, aus dem Schacht (11) hinausführendes Absaugrohr (13) gegenüber der Innenseite des Siebringes (25) abgedichtet (Dichtung 30) eingesetzt ist, und daß der Luftnachfließkanal durch den Schacht (11) hindurchführt und der Luftnachfließwiderstand mindestens durch in den Siebringkörper (25) eingefüllte Füllkörper (28) geschaffen ist.

5. Anordnung nach Anspruch 4, dadurch geKennzeichnet, daß der Luftnachfließwiderstand durch zusätzliche, in den Schacht (11) absenkbare, durch Füllkörper (28) versteifte und das geschlossenwandige Absaugrohr (13) umschließende Siebringe oder Siebringkörper (26) beeinflußbar ist.

6. Anordnung nach Anspruch 4 oder 5, dadurch gekennzeichnet, daß das zur Nacheinstellung vorgesehene Druckbegrenzungsventil (22) in den oberen Schachtverschluß eingesetzt ist.

7. Anordnung nach einem der Ansprüche 4 bis 6, dadurch gekennzeichnet, daß sie mehrere, mit Abstand konzentrisch zueinander angeordnete, geschlossenwandige Absaugrohre (13, 14) aufweist, deren offene Enden (Absaugstellen A, B) in unterschiedlichen Bereichen des Schachtes enden und jeweils von einem Siebringkörper (25) umgeben sind.

8. Anordnung nach Anspruch 7, dadurch gekennzeichnet, daß zwischen den Enden der einzelnen Absaugrohre (13, 14) zusätzliche Siebringkörper (26) im Schacht (11) angeordnet sind, deren Füllkörperfüllung mit unterschiedlicher Dichte und damit unterschiedlichem Luftnachfließwiderstand ausgebildet ist.

9. Anordnung nach einem der Ansprüche 4 bis 8, dadurch gekennzeichnet, daß eine Absaugstelle (A) im Bereich des inneren Schachtendes ausgebildet ist.

10. Anordnung nach einem der Ansprüche 4 bis 9, dadurch gekennzeichnet, daß das Absaugrohr (13) oder die Absaugrohre (13, 14) außerhalb des abgedichteten Schachtes (11) in einer Flüssigkeitsabscheidekammer (15) enden, an deren oberen Bereich der zu einem Absaug-Ventilator (19) führende Absaugkanal (18) angeschlossen ist.

11. Anordnung nach Anspruch 10, dadurch gekennzeichnet, daß die Flüssigkeitsabscheidekammer (15) mit Abscheideflächen bildenden Füllkörpern (17) oder Innenwandungen vergehen ist.

12. Anordnung nach Anspruch 10 oder 11, dadurch gekennzeichnet, daß der Absaugkanal (18) oder der Ausgangskanal des Ventilators (19) in an sich bekannter Weise über eine Filtervorrichtung (20) zum Erfassen der abgesaugten gasförmigen Verunreinigungen führt.

13. Anordnung nach einem der Ansprüche 4 bis 12, dadurch gekennzeichnet, daß die Siebringkörper (25) eine aus Siebgewebe bestehende Außen- und Innenwandung (27) aufweisen und an beiden Enden durch Ringe (31, 32) oder Scheiben (34) versteift sind.

## Claims

1. Process for the expulsion of light volatile pollutants from soil (10̸) with the aid of air which is sucked off, together with gases, from a shaft (11), which has been driven into the polluted soil and which has a gas-permeable shaft wall, at one or more shaft locations which are gas-permeably surrounded by a filler material, and that apertures are provided to permit air in the soil to be replenished from the outside, **characterised in that** the suction shaft locations (A, B) are fed replenishing air (23) via replenishing channels, which extend up to the suction shaft locations, with temporally preset or adjustable replenishing resistance, for the purpose of influencing negative pressure values and flow speed in the shaft.

2. Process according to claim 1, **characterised in that** the replenishing resistance is preset by means of filler bodies (28) which are entered into the replenishing channels.

3. Process according to claim 1 and 2, **characterised in that** a subsequent adjustment of the replenishing resistance is carried out by means of a pressure-limiting valve (22) which is additionally arranged in a replenishing flow channel.

4. Arrangement for carrying out the process according to one of claims 1 to 3, wherein the shaft wall is provided with a sieve wall which is supported by way of removable and insertible flexible filling bodies, **characterised in that** the sieve wall (27) comprises in a selected suction area an annular sieve body (25), the outside of which abuts the shaft wall and into the inner opening (29) of which is inserted a continuous suction pipe (13), which is only open at its ends and leads out of the shaft (11) and which is sealed (seal 30̸) relative to the inside of the annular sieve (25), and the air replenishing channel passes through the shaft (11) and the air replenishing resistance is established at least by the filling bodies (28) which have been filled into the annular sieve body (25).

5. Arrangement according to claim 4, **characterised in that** the air replenishing resistance is influenced by additional annular sieves or annular sieve bodies (26) which are lowered into the shaft (11), stiffened by filler bodies (28) and which surround the solid wall suction pipe (13).

6. Arrangement according to claim 4 or 5, **characterised in that** the pressure-limiting valve (22), which is provided for re-adjustment, is fitted into the upper shaft seal.

7. Arrangement according to one of claims 4 to 6, **characterised in that** it comprises a plurality of concentrically spaced solid wall suction pipes (13, 14), the open ends (suction locations A, B) of which terminate in different areas of the shaft and are surrounded by a respective annular sieve body (25).

8. Arrangement according to claim 7, **characterised in that** in the shaft (11) between the ends of the individual suction pipes (13, 14) are arranged additional annular sieve bodies (26), the filler bodies of which have different filler densities and thus different air replenishing resistances.

9. Arrangement according to one of claims 4 to 8, **characterised in that** one suction location (A) is arranged in the area of the inner shaft end.

10. Arrangement according to one of claims 4 to 9, **characterised in that** the suction pipe (13), or the suction pipes (13, 14), terminate(s) outside the sealed shaft (11) in a liquid separating chamber (15), to the top region of which is connected the suction channel (18) which connects to a suction ventilator (19).

11. Arrangement according to claim 10̸, **characterised in that** the liquid separating chamber (15) is provided with filler bodies (17) or inside walls which form separating surfaces.

12. Arrangement according to claim 10̸ or 11, **characterised in that** the suction channel (18) or the outlet channel of the ventilator (19) are in a conventional manner fed the sucked-off gaseous impurities via a filtration device (20̸).

13. Arrangement according to one of claims 4 to 12, **characterised in that** the annular sieve bodies (25) comprise an outer and inner wall (27) of sieve mesh, and that they are stiffened at both ends by rings (31, 32) or discs (34).

## Revendications

1. Procédé pour retirer des polluants volatils du sol (10) à l'aide d'air qui est aspiré ensemble avec les gaz depuis un puits (11) entraîné dans le sol pollué avec paroi de puits perméable aux gaz sur une ou plusieurs zones de puits entourées de manière perméable au gaz de matériau de remplissage, dans lequel des ouvertures sont prévues pour l'écoulement supplémentaire d'air de l'extérieur dans le sol, caractérisé en ce que dans le but d'influencer les valeurs de dépression et la vitesse d'écoulement apparaissant dans le puits, de l'air supplémentaire (23) est conduit aux zones d'aspiration du puits (A, B) par l'intermédiaire de canaux d'écoulement supplémentaire conduits jusqu'aux zones d'aspiration du puits avec résistance à l'écoulement supplémentaire pré- ou postréglable dans le temps.

2. Procédé selon la revendication 1, caractérisé en ce qu'un préréglage de la résistance à l'écoulement supplémentaire s'effectue au moyen de corps de remplissage (28) logés dans les canaux d'écoulement supplémentaire.

3. Procédé selon la revendication 1 ou 2, caractérisé en ce qu'un post-réglage de la résistance à l'écoulement supplémentaire s'effectue au moyen d'une soupape de limitation de pression (22) disposée en plus dans un canal d'écoulement supplémentaire.

4. Dispositif pour la réalisation du procédé selon l'une des revendications 1 à 3, dans lequel la paroi du puits est munie d'une paroi filtrante montable et démontable, flexible et soutenue au moyen de corps de remplissage épandus, caractérisé en ce que la paroi filtrante (27) est constituée dans la zone d'aspiration choisie d'un corps annulaire filtrant (25) dont le côté extérieur repose contre la paroi du puits et dans l'ouverture intérieure (29) duquel est placé un tube d'aspiration (13) non percé, ouvert uniquement à ses extrémités, conduisant hors du puits (11), rendu étanche (joint 30) par rapport à la paroi intérieure de l'anneau filtrant (25) et en ce que le canal d'écoulement d'air supplémentaire conduit à travers le puits (11) et la résistance à l'écoulement d'air supplémentaire est créée au moins par des corps de remplissage (28) remplis dans les corps annulaires filtrants (25).

5. Dispositif selon la revendication 4, caractérisé en ce que la résistance à l'écoulement d'air supplémentaire peut être influencée par des anneaux filtrants ou corps annulaires filtrants (26) supplémentaires pouvant être déplacés vers le bas dans le puits (11), renforcés par des corps de remplissage (28) et entourant le tube d'aspiration (13) aux parois fermées.

6. Dispositif selon la revendication 4 ou 5, caractérisé en ce que la soupape de limitation de pression (22) prévue pour le post-réglage est placée dans la fermeture supérieure du puits.

7. Dispositif selon l'une des revendications 4 à 6, caractérisé en ce qu'il présente plusieurs tubes d'aspiration (13, 14) à paroi fermée, disposés concentriquement à distance les uns des autres, dont les extrémités ouvertes (zones d'aspiration A, B) débouchent dans différentes zones du puits et sont entourées chacune d'un corps annulaire filtrant (25).

8. Dispositif selon la revendication 7, caractérisé en ce qu'entre les extrémités des différents tubes d'aspiration (13, 14), des corps annulaires filtrants supplémentaires (26) dont le remplissage des corps de remplissage est conçu avec une densité différente et donc une résistance à l'écoulement d'air supplémentaire différente, sont disposés dans le puits (11).

9. Dispositif selon l'une des revendications 4 à 8, caractérisé en ce qu'une zone d'aspiration (A) est formée dans la zone de l'extrémité intérieure du puits.

10. Dispositif selon l'une des revendications 4 à 9, caractérisé en ce que le tube d'aspiration (13) ou les tubes d'aspiration (13, 14) débouchent à l'extérieur du puits (11) rendu étanche dans une chambre de séparation de liquide (15) à la zone supérieure de laquelle est raccordé le canal d'aspiration (18) conduisant à un ventilateur d'aspiration (19).

11. Dispositif selon la revendication 10, caractérisé en ce que la chambre de séparation de liquide (15) est munie de corps de remplissage (17) ou de parois intérieures formant des surfaces de séparation.

12. Dispositif selon la revendication 10 ou 11, caractérisé en ce que le canal d'aspiration (18) ou le canal de sortie du ventilateur (19) passe de façon connue en soi par un dispositif de filtre (20) pour saisir les polluants gazeux aspirés.

13. Dispositif selon l'une des revendications 4 à 12, caractérisé en ce que les corps annulaires filtrants (25) présentent une paroi intérieure et extérieure (27) constituée d'une texture de tamisage et sont renforcés aux deux extrémités par des bagues (31, 32) ou des rondelles (34).
